# EUROPEAN PATENT APPLICATION

(11) **EP 0 770 524 A1**
(43) Date of publication of application: **02.05.1997**
(21) Application number: 96116998.4
(22) Date of filing: 23.10.1996
(51) Int. Cl.: B60R 25/00

(54) **A system for moving automatically into predetermined positions motorised adjustable devices present in a motor vehicle**

(30) Priority: 26.10.1995 IT TO950868
(71) Applicant: FIAT AUTO S.p.A., 10135 Torino (IT)
(72) Inventor: Formento, Gian Felice, 10134 Torino (IT)
(74) Representative: Serra, Francesco

(57) **Abstract**

A system for moving automatically into a predetermined position adjustable devices present in a motor vehicle, especially a car, comprises a central unit (8) inside the car and at least one external portable device (14) associated with the key (10) or the remote control (12) for opening a door (2). When the door (2) is closed, the central unit (8) transmits the signals indicating the positions of the adjustable devices (6) to the external portable device (14) in which they are stored. When a door (2) is opened, the signals stored in the external portable device (14) are transmitted to the central unit (8) for moving the adjustable devices.

## Description

The present invention relates to a system for moving automatically into predetermined positions motorized adjustable devices present in a motor vehicle, especially a car.

In particular, the present invention relates to the automatic adjustment into predetermined positions of the side mirrors, the seats and the associated seat backs, the steering wheel, or other devices, each of which is provided with electrical, hydraulic or electro-hydraulic mechanised adjusting means.

The problem which the present invention is intended to solve is that which occurs when the same motor vehicle is used by several drivers. Each of the occupants of the motor vehicle, and especially the driver, moves the various adjustable devices into his preferred position. When the driver's seat is occupied by another person, he has to adjust the various devices according to his requirements, obviously changing the adjustments made by the previous driver.

When the first driver again occupies the driver's seat, he has to make adjustments according to his preferences and so on.

All the above constitutes a substantial waste of time, without the reliability of immediately setting the adjustments in the manner chosen before.

The above assumes particular importance when the drivers are numerous and change frequently, for example in the case of motor vehicles owned by companies, the so-called "fleets" of motor vehicles, or simply in the case of families whose various members use the same car.

The aim of the present invention is to provide a personalised automatic adjustment system for the various devices present in a motor vehicle, which system overcomes the above-mentioned disadvantages, has a simple structure and is inexpensive.

The present invention achieves the above-mentioned aims by means of a system for moving automatically into predetermined positions adjustable devices present in a motor vehicle, especially a car, in which are present motorised actuating means which are associated with the adjustable devices and which can move them, having the characteristics claimed specifically in the claims which follow.

The invention will now be described with reference to the appended drawings which are provided purely by way of non-limiting example and in which:
- Figure 1 illustrates diagrammatically an embodiment of the present invention in two different forms; and
- Figures 2 and 3 show a second embodiment of the present invention in two different forms.

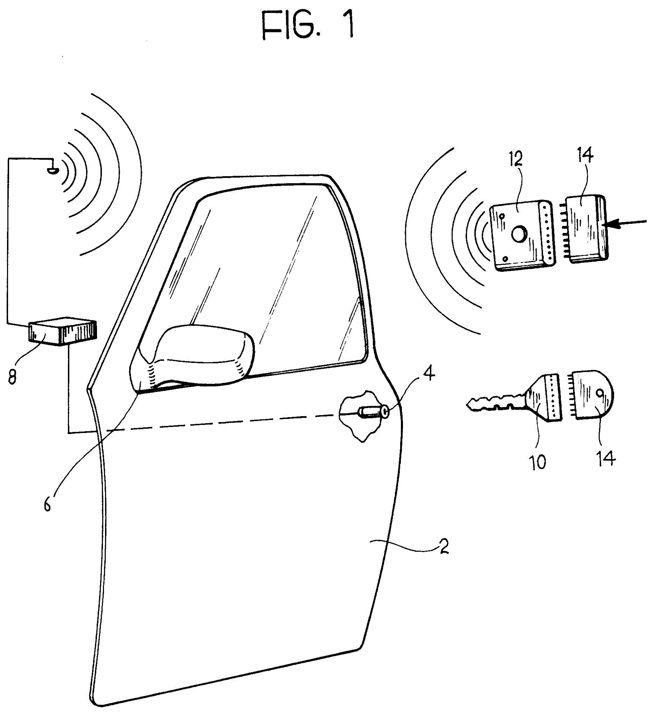

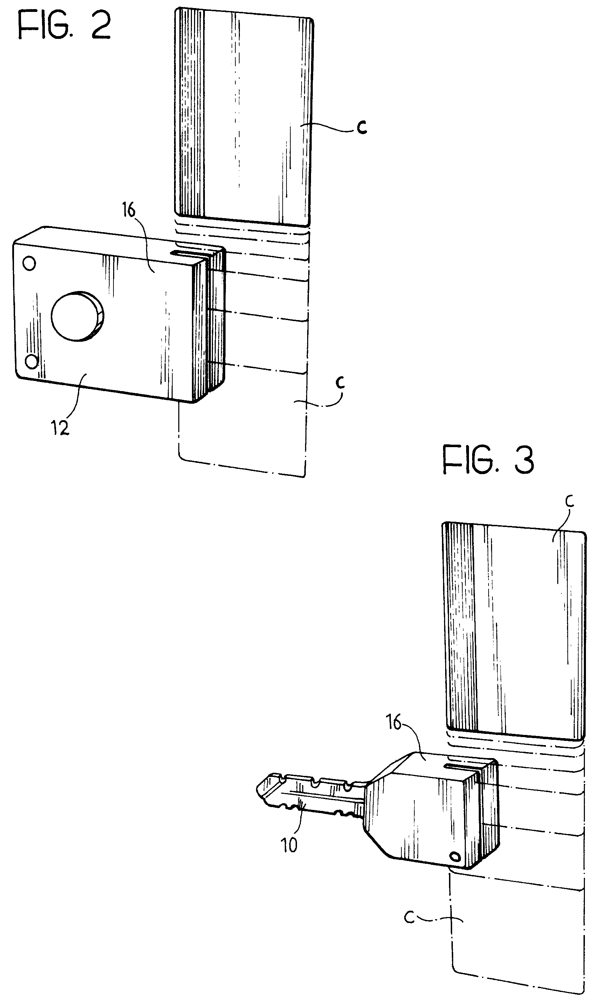

Referring to Figure 1, 2 indicates the door of a motor vehicle, for example a car (not shown) equipped with the usual block 4 for the introduction of the key for locking/unlocking the lock (not shown) with which the door is provided.

A door mirror 6 which can be adjusted electrically by means of an actuator (not shown) is associated with the door 2 and the position it reaches is detected by a sensor which is known per se and which, for the sake of simplicity, is not shown.

The car may comprise other adjustable devices (not shown), such as the seats and the seat backs, the steering wheel, etc., each of which is operated by an associated actuator (not shown), and the positions reached by the adjustable devices are detected by associated sensors which are known per se and are likewise not shown.

The position reached by each adjustable device moved by the associated actuator is detected by the associated sensor which supplies an electrical signal indicating that position to an internal central unit 8 which is connected to the block 4 of the lock. The internal central unit 8 stores the signals coming from the position sensors and is capable of transmitting them in coded form and also of receiving coded signals of the same type, as will be described hereinafter.

The usual key 10 or the normal remote control 12 are associated with a storing, receiving and transmitting unit 14 of a type known per se which is outside the car. The device to which the present invention relates operates in the following manner.

Since each driver has to have his own personal external storing, receiving and transmitting unit 14, which may be associated with a key 10 or with a remote control 12, unique to each driver, or a key or remote control with an associated personal external unit 14, when the car is left and the remote control 12 is operated or the key 10 is inserted in the block 4, the internal central unit 8 stores the signals which indicate the positions of the adjustable devices, and which are provided by the sensors associated with the various adjustable devices, and transmits them in coded form to an external unit 14 which stores them in its turn.

When another driver, after having carried out his own personalized adjustments, leaves the car and closes the door 2 by means of the remote control 12 or key 10, the current positions of the adjustable devices are stored in his personal external unit 14.

If the first driver now returns, by opening the door 2 by means of the key 10 or the remote control 12, he sends from his external unit 14 his stored personal data to the internal unit 8 which substitutes them for those present in the memory and which operates the actuators of the adjustable devices until the stored positions are reached, which may of course be those already present in the unit 8 if no changes have been made to the adjustments since the last time the driver entered the car. When this driver leaves the car, by operating the key 10 or the remote control 12, the data present in the internal unit 8 are transmitted to the external unit 14 and are stored therein.

The process just described is repeated for each driver who has thus stored his desired adjustments in his personal external unit 14.

The transmission of the coded data from/to the units 8 and 14 can be effected by means of infra-red, ultrasound or radio frequency signals or by other known means.

Figures 2 and 3 show another embodiment of the system according to the invention.

In this embodiment, the internal central unit (not shown in these Figures) can store on a magnetic card C the signals indicating the positions reached by the adjustable devices. Before leaving the car, the driver introduces the magnetic card C, in accordance with customary techniques, into the slot of a magnetic card writing device (not shown) so that the current adjustments are stored on the magnetic card C.

When the same driver returns to the vehicle, he causes the magnetic card C to be read by a reader-memoriser 16 associated with the customary key 10 or with the remote control 12 which comprise data transmitters similar to those already described above. When the remote control 12 or the key 10 for opening the lock of the door 2 is operated, the data stored in the devices 16 are transmitted to the internal central unit which operates the actuators for positioning the adjustable devices in accordance with the signals received.

In this second embodiment of the invention, the internal central unit is not provided with infra-red or radio frequency remote transmission devices, the data being transmitted by means of the magnetic card C.

Naturally, the principle of the invention remaining the same, the forms of embodiment and details of construction may vary widely without thereby departing from the scope of the present invention.

## Claims

1. A system for moving automatically into predetermined positions adjustable devices (6) present in a motor vehicle, especially a car, in which are present motorized actuating means which are associated with the adjustable devices (6) and which can move them, characterised in that it comprises:
- sensor means which are associated with the adjustable devices (6) and are capable of detecting the position thereof;
- a central unit (8) in the motor vehicle, which unit is connected to the sensor means and to the actuating means and is capable, in a first operative state, of receiving and storing electrical signals indicating the positions of the adjustable devices (6) and, in a second operative state, of transmitting to the outside the electrical signals indicating the positions of the adjustable devices (6); and
- at least one portable device (14) which is capable, in the second operative state of the central unit (8), of receiving and storing electrical signals indicating the positions of the adjustable devices (6) and, in the first operative state of the central unit (8), of transmitting to the central unit (8) stored electrical signals indicating the positions of the adjustable devices (6).

2. A system according to Claim 1, characterised in that the at least one portable device (14) is a receiving, storing and transmitting unit associated with the remote control (12) for opening/closing a door (2) of the car.

3. A system according to Claim 1, characterised in that the at least one portable device (14) is a receiving, storing and transmitting unit associated with the key (10) for opening/closing a door (2) of the car.

4. A system according to any one of the preceding claims, characterised in that the first operative state corresponds to the moment at which the lock of a door (2) is closed.

5. A system according to any one of the preceding claims, characterised in that the second operative state corresponds to the moment at which a door (2) is opened.

6. A system according to Claim 1, characterised in that the central unit (8) comprises a device for writing magnetic cards (C).

7. A system according to Claim 1, characterised in that the portable device (14) comprises a reader (16) of magnetic cards (C).
